# EUROPÄISCHE PATENTSCHRIFT

(11) **EP 0 449 356 B1**
(45) Veröffentlichungstag und Bekanntmachung des Hinweises auf die Patenterteilung: **16.08.1995**
(21) Anmeldenummer: 91200601.2
(22) Anmeldetag: 19.03.1991
(51) Int. Cl.: B22D 19/14, B22D 19/00, F16J 10/04

(54) **Einzelzylinder bzw. Mehrzylinderblock**
Single or multi-cylinder block
Culasse pour un moteur à cylindre unique ou multicylindre

(30) Priorität: 27.03.1990 DE 4009714
(43) Veröffentlichungstag der Anmeldung: 02.10.1991
(73) Patentinhaber: KOLBENSCHMIDT Aktiengesellschaft, D-74150 Neckarsulm (DE)
(72) Erfinder: Sick, Georg, Dr., W-7141 Beilstein (DE); Everwin, Peter, W-6927 Bad Rappenau (DE); Duve, Hans Heinrich, W-7102 Weinsberg (DE)
(74) Vertreter: Rieger, Harald, Dr.

(56) Entgegenhaltungen:
- EP-A- 0 143 330
- WO-A-86/03997
- GB-A- 2 193 786
- US-A- 3 896 009
- US-A- 4 738 298
- MOTORTECHNISCHE ZEITSCHRIFT, Band 35, Februar 1974, Seiten 33-41, Stuttgart,DE; H. DORSCH et al.: "ALUSIL-Zylinder und FERROCOAT-Kolben für den Porsche-Motor 911"

## Beschreibung

Die Erfindung betrifft einen in einer metallischen Dauerform gegossenen, buchsenlosen Einzelzylinder oder Mehrzylinderblock aus Aluminiumlegierung für Verbrennungskraftmaschinen mit in der Aluminiummatrix eingebetteten, gleichmäßig darin verteilten, über die Zylinderlaufbahn um 0,5 bis 10 »m, vorzugsweise 2 bis 5 »m, herausragenden, mechanisch geglätteten und eine Größe von 20 bis 80 »m, vorzugsweise 30 bis 60 »m, aufweisenden Siliziumkörnern.

Ein derartiger Einzelzylinder oder Mehrzylinderblock gehört zum allgemein bekannten Stand der Technik.

Aluminiumlegierungen sind unter heutigen Gesichtspunkten die wichtigsten Zukunftswerkstoffe im Kraftfahrzeugbau mit steigender Anwendungstendenz. Primär wird dabei neben anderen Vorzügen der Gewichtsvorteil gegenüber Eisenwerkstoffen ausgenutzt. Dies hat spürbare Auswirkungen nicht nur beim Kolben, sondern ganz besonders auch beim Einzelzylinder und Mehrzylinderblock als dem schwersten Einzelteil eines Kraftfahrzeugs. So sind Gewichtsreduzierungen von 40 bis 60 % durch die Umstellung des Mehrzylinderblocks von Grauguß auf Aluminiumlegierungen für den Motorblock realisierbar bzw. bereits realisiert. In der Z.: MTZ Motortechnische Zeitschrift 35 (1974), S. 33-41 ist ein aus einer übereutektischen Aluminium-Siliziumlegierung des Typs AlSi17Cu4 im Niederdruck-Gießverfahren hergestellter Zylinder dargestellt. Eine Herstellung im Druckgußverfahren ist ebenfalls möglich. Die in der Zylinderlaufbahn durch Primärausscheidung aus der übereutektischen Aluminiumlegierung erzeugten, gleichmäßig verteilten und gleichmäßig ausgebildeten Siliziumkörner besitzen eine Korngröße zwischen 30 und 80 »m. Nach dem Gießen des Einzelzylinders bzw. Mehrzylinderblocks wird die Zylinderbohrung durch Vor- und Feinbohren mechanisch bearbeitet und anschließend vor- und feingehont, so daß die Siliziumkörner geglättet sind und zunächst mit der umgebenden Aluminiumlegierungsmatrix eine Ebene bilden. Nach dem Honvorgang wird die Aluminiumlegierungsmatrix zwischen den Siliziumkörnern durch elektrochemische Bearbeitung leicht zurückgesetzt, so daß die Siliziumkörner als Traggerüst für die Kolbenringe und den Kolbenschaft aus der unbewehrten Zylinderlaufbahn geringfügig, d.h. um 2 bis 5 »m herausragen. Eine solche Zylinderlaufbahn kann nur in der Kombination mit einem wenigstens am Kolbenschaft mit einer Eisenschicht von etwa 20 »m Dicke beschichteten Leichtmetallkolben benutzt werden, um bei extremen Laufbedingungen unter allen Umständen einen Kontakt zwischen der Aluminiumlegierungsmatrix der Zylinderlaufbahn und dem Leichtmetall des Kolbens zu vermeiden. Durch die Eisenbeschichtung des Kolbenschafts wird der Kolbenschaftverschleiß erheblich gesenkt und die Freßneigung zwischen Kolbenschaft und Zylinderlaufbahn eliminiert. Der Nachteil eines vorstehend beschriebenen Einzelzylinders bzw. Mehrzylinderblocks besteht darin, daß der gesamte Zylinderblock aus einer mit beachtlichem Aufwand hergestellten übereutektischen Hütten-Aluminiumlegierung gegossen ist. Infolge des hohen Siliziumgehalts tritt ein erhöhter Werkzeugverschleiß bei der mechanischen Bearbeitung des Zylinderblocks auf.

Bekannt sind auch buchsenlose Einzelzylinder bzw. Mehrzylinderblöcke aus einer Aluminiumlegierung des Typs AlSi9Cu3, bei denen auf die Oberfläche der Zylinderbohrung eine auf galvanischem Weg erzeugte, 50 bis 80 »m dicke Grundschicht aus Nickel mit darin dispergierten Siliziumcarbidteilchen einer Größe von 1 bis 3 »m aufgebracht ist. Die Zylinderlaufbahn wird anschließend gehont. Die Siliziumcarbidteilchen dienen als Traggerüst für Ringe und Kolbenschaft. Die Herstellung der Nickel-Dispersionsbeschichtung ist mit einem nicht unerheblichen Verfahrensaufwand verbunden. Insbesondere sind im Rahmen der Galvanikanlage Entgiftungseinrichtungen für die Vorbehandlungsbäder notwendig. Der bei der Entsorgung anfallende Schlamm muß gesammelt und vorschriftsmäßig beseitigt werden und in den Arbeitsbereichen der Beschichtungsbäder müssen Abzüge mit eingebauten Waschanlagen installiert sein. Hinzu kommt, daß im Reparaturfall die Handhabung der Regenerierung der Zylinderbohrungen aufwendig und umständlich ist.

In der US-A-4 738 298 ist ein in einen Mehrzylinderblock eingießbarer Faserformkörper aus Kohle- und Aluminiumoxidfasern beschrieben, der nach der Saugformmethode hergestellt wird. Der getrocknete und kalzinierte Faserformkörper wird auf 300°C erwärmt und dann auf einen Gießkern gesetzt. Die Aluminiumlegierungsschmelze wird mit einer Temperatur von 730 bis 740°C gegossen und unter Druck zur Erstarrung gebracht.

In neuerer Zeit ist in der DE-A-3 725 495 ein Mehrzylinderblock für Verbrennungskraftmaschinen vorgeschlagen worden, bei der die Zylinderlaufbahn aus einem zylindrischen, faserverstärkten Abschnitt aus einer Mischung aus einer auf Aluminiumoxid basierenden Faser mit einem Volumenanteil von 8 bis 20 % und einer Kohlenstoffaser mit einem Volumenanteil von 0,3 bis 15 % mit einer Leichtmetallmatrix besteht, wobei die auf Aluminiumoxid basierende Faser bis zu 25 % Siliziumoxid enthält. Bei einer derartig ausgebildeten Zylinderlaufbahn ist nach wie vor der Einsatz eines Leichtmetallkolbens erforderlich, dessen Mantel eine galvanisch abgeschiedene, durch eine ebenfalls galvanisch abgeschiedene Zinnschicht abgedeckte Eisenschicht aufweist, um einen Kontakt zwischen der Aluminiumlegierungsmatrix des Mehrzylinderblocks und dem Leichtmetallkolben zu vermeiden. Die in der Zylinderlauffläche infiltrierte Hybrid-Faser ist teuer und die tribologischen Eigenschaften unter Betriebsbedingungen sind schlechter als diejenigen der aus übereutektischen Aluminium-Siliziumlegierungen hergestellten Zylinderlaufflächen.

Es ist die Aufgabe der vorliegenden Erfindung, den eingangs angeführten Einzelzylinder bzw. Mehrzylinderblock so zu gestalten, daß dieser aus mit vergleichsweise geringerem Aufwand herstellbarer untereutektischer, vorzugsweise Umschmelz-Aluminiumlegierung, bestehen kann, wobei nur in der Zylinderlauffläche tribologische Eigenschaften eingestellt werden, die ähnlich denjenigen der übereutektischen Legierungen sind.

Die Lösung dieser Aufgabe besteht darin, daß in den Zylinder ein die Zylinderlaufbahn bildender, mit untereutektischer Aluminiumlegierung penetrierter hohlzylinderförmiger Faserformkörper aus keramischen Fasern mit darin eingefügten Siliziumkörnern und/oder Hartstoffkörner in Form von Siliziumcarbid, Chrom-, Wolfram-, Molybdän-, Titan-, Niob-, Vanadiumcarbiden, -nitriden, -siliziden einzeln oder zu mehreren eingegossen sind. Die Siliziumkörner und/oder Hartstoffkörner ragen als Traggerüst für die Kolbenringe und den Kolbenschaft aus der Zylinderlaufbahn heraus, wobei der Faseranteil und der Anteil an Siliziumkörnern und/oder Hartstoffkörnern so groß ist, daß ein großflächiger Kontakt zwischen der Aluminiumlegierungsmatrix des Zylinders und dem wenigstens an seinem Kolbenschaft mit einer Eisenschicht beschichteten Leichtmetallkolben nicht entstehen kann. Mit einer derartig gestalteten Zylinderlaufbahn lassen sich die guten herausragenden tribologischen Eigenschaften des aus übereutektischer Hütten-Aluminiumlegierung des Typs AlSi17Cu4Mg gegossenen Einzelzylinders bzw. Mehrzylinderblocks erreichen, während die Bearbeitung der übrigen Oberflächen des Einzelzylinders bzw. Mehrzylinderblocks eines vergleichsweise deutlich niedrigeren Bearbeitungsaufwands bedarf.

Zweckmäßigerweise besitzt der Faserformkörper eine Wanddicke von 0,5 bis 10 mm, vorzugsweise 1,5 bis 5 mm.

Nach einem weiteren Erfindungsmerkmal beträgt der Faseranteil des Faserformkörpers 5 bis 30 Vol.-% und der Anteil an Siliziumkörnern und/oder Hartstoffkörnern 30 bis 60 Gew.-%, bezogen auf den Faseranteil.

Es ist fertigungstechnisch angebracht, die Fasern parallel zur Zylinderachse, innerhalb der konzentrischen Zylinderflächen des Faserformkörpers jedoch statistisch regellos auszurichten. Die Fasern können allerdings auch beliebige Winkel mit der Zylinderachse bilden, ohne daß dadurch die angestrebte Funktion in irgendeiner Weise beeinträchtigt wird. Da der Faserformkörper als Halterung für die Siliziumkörner dient, sind an die verwendeten Fasern keine erhöhten Anforderungen zu stellen.

Bei den verwendeten Fasern beträgt der Durchmesser 2 bis 25 »m und das Längen/Durchmesser-Verhältnis 5 bis 25. Im Rahmen der weiteren Ausbildung der Erfindung werden vorzugsweise Fasern aus Aluminiumoxid oder Aluminiumsilikat eingesetzt.

Bei dem Verfahren zur Herstellung des Einzelzylinders bzw. des Mehrzylinderblocks wird der auf 400 bis 600°C erwärmte Faserformkörper auf die Pinole der Gießform aufgesetzt und die Aluminiumlegierungsschmelze mit einer Temperatur von 650 bis 800°C in die Gießform eingefüllt und unter Druck zur Erstarrung gebracht.

Vorzugsweise wird die Schmelze unter einem Druck von wenigstens 30 bar, insbesondere jedoch 200 bis 1000 bar, zur Erstarrung gebracht.

Es ist auch möglich, anstelle des Druckgießverfahrens die Aluminiumlegierungsschmelze bei einem niedrigen Druck von 1,2 bis 2,0 bar zur Erstarrung zu bringen.

Der Faserformkörper wird in vorteilhafter Weise nach der sogenannten Saugformmethode hergestellt, bei der ein hohlzylinderförmiger, am Boden geschlossener Filter in eine wäßrige alkoholische Suspension aus Fasern, Siliziumkörnern und/oder Hartstoffkörnern und organischem und/oder anorganischem Bindemittel eingetaucht wird. Durch Absaugen der Flüssigkeit aus dem Filterinneren wird auf dem Außenmantel des Filters ein aus Fasern bestehendes Vlies mit darin eingefügten Siliziumkörnern und/oder Hartstoffkörnern gebildet. Nach dem Abnehmen des Vlies wird dieses bei Temperaturen von 800 bis 1000°C gesintert und dabei so verfestigt, daß es anschließend zur Herstellung einer glatten Oberfläche wenigstens am Außenmantel problemlos mechanisch bearbeitet werden kann. Der so vorbehandelte Faserformkörper ist auf die Pinole der Gießform aufsetzbar.

Eine andere Möglichkeit der Herstellung des Faserformkörpers besteht darin, die wäßrige alkoholische Suspension aus Fasern, Siliziumkörnern und/oder Hartstoffkörnern und Bindemittel in der Dicke des Faserformkörpers unmittelbar auf die Pinole aufzuspritzen und dann die Aluminiumlegierungsschmelze mit einer Temperatur von 650 bis 800°C in die Gießform einzufüllen und unter Druck zur Erstarrung zu bringen.

Die Erfindung ist in der Zeichnung beispielhaft dargestellt und wird nachfolgend näher erläutert. Es zeigen:

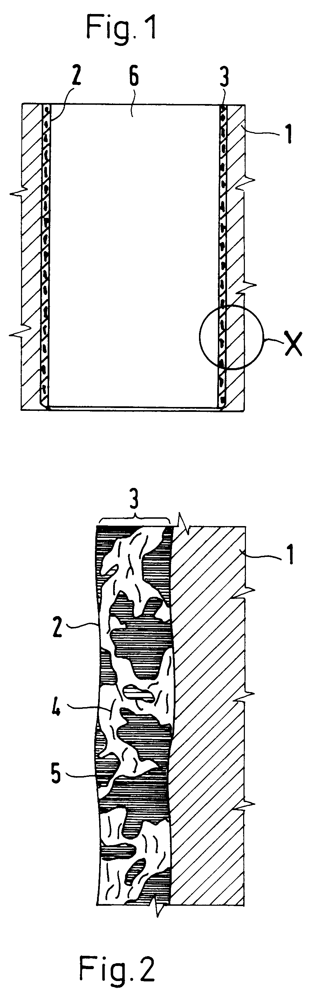

- Fig. 1: einen ausschnittsweisen Längsschnitt durch einen Zylinder eines Mehrzylinderblocks und
- Fig. 2: das Detail X der Fig. 1 in 250-facher Vergrößerung.

In den aus einer untereutektischen Aluminiumlegierung des Typs AlSi9Cu3 mit einem Druck von 300 bar gegossenen Mehrzylinderblock (1) sind die Zylinderlaufbahn (2) bildende, mit der Aluminiumlegierung penetrierte hohlzylinderförmige Faserformkörper (3) von 3 mm Wanddicke aus Aluminium-Oxidfasern (4) mit einer mittleren Länge von 80 »m und einem Durchmesser von 5 »m mit darin eingefügten Siliziumkörnern (5) von 30 bis 60 »m Größe eingegossen. Im Schliff bedecken die Siliziumkörner 12 bis 15 % der Fläche. Der Fasergehalt beträgt 25 Vol.-%. Die Fasern sind im wesentlichen parallel zur Zylinderachse ausgerichtet, innerhalb der konzentrisch zur Zylinderachse verlaufenden Zylindermantelflächen ist ihre Orientierung statistisch regellos. Der Anteil der Siliziumkörner (5) beträgt 40 Gew.-%, bezogen auf den Anteil an Fasern (4). Nach dem Gießen wird die Zylinderbohrung (6) mechanisch durch Vorund Feinbohren bearbeitet. Die beim Vor- und Feinbohren zerstörten Siliziumkörner (5) werden durch Vor- und Feinhonen entfernt. Nach dem Feinhonen erfolgt als letzter Bearbeitungsschritt eine elektrochemische oder stromlose Ätzung. Dabei wird z.B. im elektrochemischen Ätzvorgang unter Verwendung von Natriumnitrat die beim Honvorgang über die Siliziumkörner geschmierte Aluminiumlegierung entfernt und die Aluminiummatrix zwischen den Siliziumkörnern leicht, im Mittel um 3 »m, zurückgesetzt.

## Patentansprüche

1. In einer metallischen Dauerform gegossener, buchsenloser Einzelzylinder oder Mehrzylinderblock aus Aluminiumlegierung (1) für Verbrennungskraftmaschinen mit in der Aluminiummatrix eingebetteten, gleichmäßig darin verteilten, über die Zylinderlaufbahn (2) um 0,5 bis 10 »m, vorzugsweise 2 bis 5 »m, herausragenden, mechanisch geglätteten und eine Größe von 20 bis 80 »m, vorzugsweise 30 bis 60 »m, aufweisenden Siliziumkörnern (5), dadurch gekennzeichnet, daß in den Zylinder ein die Zylinderlaufbahn (2) bildender, mit untereutektischer Aluminiumlegierung (1) penetrierter hohlzylinderförmiger Faserformkörper (3) aus keramischen Fasern (4) mit darin eingefügten Siliziumkörnern (5) eingegossen ist.

2. In einer metallischen Dauerform gegossener, buchsenloser Einzelzylinder oder Mehrzylinderblock aus Aluminiumlegierung (1) für Verbrennungskraftmaschinen mit in der Aluminiummatrix eingebetteten, gleichmäßig darin verteilten, über die Zylinderlaufbahn (2) um 0,5 bis 10 »m, vorzugsweise 2 bis 5 »m, herausragenden, mechanisch geglätteten und eine Größe von 20 bis 80 »m, vorzugsweise 30 bis 60 »m, aufweisenden Hartstoffkörnern (5), dadurch gekennzeichnet, daß in den Zylinder ein die Zylinderlaufbahn (2) bildender, mit untereutektischer Aluminiumlegierung (1) penetrierter hohlzylinderförmiger Faserformkörper (3) aus keramischen Fasern (4) mit darin eingefügten Hartstoffkörnern (5) in der Form von Siliziumcarbid, Chrom-, Wolfram-, Molybdän-, Titan-, Niob-, Vanadiumcarbiden, -nitriden, -siliziden einzeln oder zu mehreren eingegossen ist.

3. Zylinder nach einem der Ansprüche 1 und 2, dadurch gekennzeichnet, daß in den Faserformkörper (3) Siliziumkörner (5) und Hartstoffkörner eingefügt sind.

4. Zylinder nach einem der Ansprüche 1 bis 3, dadurch gekennzeichnet, daß die Wanddicke des Faserformkörpers (3) 0,5 bis 10 mm, vorzugsweise 1,5 bis 5 mm, beträgt.

5. Zylinder nach einem der Ansprüche 1 bis 4, dadurch gekennzeichnet, daß der Faseranteil des Faserformkörpers (3) 5 bis 30 Vol.-% und der Anteil an Siliziumkörnern und/oder Hartstoffkörnern 30 bis 60 Gew.-%, bezogen auf den Faseranteil, betragen.

6. Zylinder nach einem der Ansprüche 1 bis 5, dadurch gekennzeichnet, daß der Durchmesser der Fasern (4) 2 bis 25 »m und das Längen/Durchmesser-Verhältnis 5 bis 25 beträgt.

7. Zylinder nach einem der Ansprüche 1 bis 6, dadurch gekennzeichnet, daß die Fasern (4) aus Aluminiumoxid oder Aluminiumsilikat bestehen.

8. Verfahren zur Herstellung des Einzelzylinders bzw. Mehrzylinderblocks nach den Ansprüchen 1 bis 7, bei dem der erwärmte Faserformkörper (3) auf die Pinole der Gießform aufgesetzt und die Aluminiumlegierungsschmelze mit einer Temperatur von 650 bis 800°C in die Gießform eingefüllt und unter Druck zur Erstarrung gebracht wird, dadurch gekennzeichnet, daß der Faserformkörper (3) auf eine Temperatur von 400 bis 600°C erwärmt wird.

9. Verfahren nach Anspruch 8, dadurch gekennzeichnet, daß die Aluminiumlegierungsschmelze unter einem Druck von wenigstens 30 bar, vorzugsweise 200 bis 1000 bar, zur Erstarrung gebracht wird.

10. Verfahren nach Anspruch 8, dadurch gekennzeichnet, daß die Aluminiumlegierungsschmelze unter einem Druck von 1,2 bis 2 bar zur Erstarrung gebracht wird.

11. Verfahren zur Herstellung des Faserformkörpers (3) für die Verwendung nach Anspruch 8, dadurch gekennzeichnet, daß der Faserformkörper (3) nach der Saugformmethode, bei der ein hohlzylinderförmiger, am Boden geschlossener Filter in eine wäßrige alkoholische Suspension aus Fasern, Siliziumkörnern und/oder Hartstoffkörnern und organischem und/oder anorganischem Bindemittel eingetaucht, durch Absaugen der Flüssigkeit aus dem Filterinneren auf dem Außenmantel des Filters ein aus Fasern bestehendes Vlies mit darin eingefügten Siliziumkörnern und/oder Hartstoffkörnern geformt, das Vlies bei Temperaturen von 800 bis 1000°C erwärmt und anschließend mechanisch bearbeitet wird, erzeugt wird.

12. Verfahren zur Herstellung des Einzelzylinders bzw. Mehrzylinderblocks nach den Ansprüchen 1 bis 7, bei dem der Faserformkörper (3) auf die Pinole der Gießform aufgetragen und dann die Aluminiumlegierungsschmelze mit einer Temperatur von 650 bis 800°C in die Gießform eingefüllt und unter Druck zur Erstarrung gebracht wird, dadurch gekennzeichnet, daß eine wäßrige alkoholische Suspension aus Fasern, Siliziumkörnern und/oder Hartstoffkörnern (5) und organischem und/oder anorganischem Bindemittel auf die Pinole der Gießform in der Dicke des Faserformkörpers aufgespritzt wird.

## Claims

1. A linerless individual cylinder or multi-cylinder block (1) for internal combustion engines, which consists of an aluminum alloy and has been cast in a metallic permanent mould, comprising grains (5) of silicon, which are embedded in the aluminum matrix and are uniformly distributed therein and protrude by 0.5 to 10 micrometers, preferably 2 to 5 micrometers, beyond the sliding surface (7) of the cylinder and have been mechanically smoothened and have a size from 20 to 80 micrometers, preferably 30 to 60 micrometers, characterized in that a shaped fibrous body (3), which has the shape of a hollow cylinder and consists of ceramic fibres (4) and grains (5) of silicon included therein and constitutes the sliding surface (2) of the cylinder and is penetrated by hypoeutectic aluminum alloy, is embedded in the cylinder casting.

2. A linerless individual cylinder or multi-cylinder block (1) for internal combustion engines, which consists of an aluminum alloy and has been cast in a metallic permanent mould, comprising grains (5) of a hard material, which are embedded in the aluminum matrix and are uniformly distributed therein and protrude by 0.5 to 10 micrometers, preferably 2 to 5 micrometers, beyond the sliding surface (2) of the cylinder and have been mechanically smoothened and have a size from 20 to 80 micrometers, preferably 30 to 60 micrometers, characterized in that a shaped fibrous body (3), which has the shape of a hollow cylinder and consists of ceramic fibres (4) and grains (5) of hard material consisting one or more of silicon carbide and carbides, nitrides and silicides of chromium, tungsten, molybdenum, titanium, niobium and vanadium, included therein and constitutes the sliding surface (2) of the cylinder and is penetrated by hypoeutectic aluminum alloy, is embedded in the cylinder casting.

3. A cylinder according to any of either of claims 1 and 2, characterized in that grains (5) of silicon and grains of hard material are included in the shaped fibrous body (3).

4. A cylinder according to any of claims 1 to 3, characterized in that the shaped fibrous body (3) has a wall thickness from 0.5 to 10 mm, preferably 1.5 to 5 mm.

5. A cylinder according to any of claims 1 to 4, characterized in that the fibres of the shaped fibrous body (1) amount to 5 to 30 % by volume and the grains of silicon and/or the grains of hard material amount to 30 to 60 % by weight of the fibres.

6. A cylinder according to any of claims 1 to 5, characterized in that the fibres (4) are 2 to 25 micrometers in diameter and have a length to diameter ratio from 5 to 25.

7. A cylinder according to any of claims 1 to 6, characterized in that the fibres (4) consist of alumina or aluminum silicate.

8. A process of manufacturing the individual cylinder or multi-cylinder block according to claims 1 to 7, wherein the heated shaped fibrous body (3) is mounted on the mandrel of the casting mould and the molten aluminum alloy at a temperature from 650 to 800°C is charged into the casting mould and caused to solidify under pressure, characterized in that the shaped fibrous body (3) is heated to a temperature from 400 to 600°C.

9. A process according to claim 8, characterized in that the molten aluminum alloy is caused to solidify under a pressure of at least 30 bars, preferably from 200 to 1000 bars.

10. A process according to claim 8, characterized in that the molten aluminum alloy is caused to solidify under a pressure from 1.2 to 2 bars.

11. A process of manufacturing the shaped fibrous body (3) for the use according to claim 8, characterized in that the shaped fibrous body (3) is made in a vacuum moulding process, in which a hollow-cylindrical filter having a closed bottom is immersed into an aqueous alcoholic suspension of fibres, grains of silicon and/or grains of hard material and organic and/or inorganic binder, and the liquid is sucked from the interior of the filter to form on the outside peripheral surface of the filter a nonwoven fabric consisting of fibres and grains of silicon and/or grains of hard material included therein, and the nonwoven fabric is heated at temperature from 800 to 1000°C and is subsequently mechanically processed.

12. A process of manufacturing the individual cylinder or multi-cylinder block according to claims 1 to 7, wherein the shaped fibrous body (3) is applied to the mandrel of the casting mould and subsequently the molten aluminum alloy at a temperature from 650 to 800°C is charged into the casting mould and is caused to solidify under pressure, characterized in that an aqueous alcoholic suspension consisting of fibres, grains of silicon and/or grains of hard material (5) and organic and/or inorganic binder is sprayed onto the mandrel of the casting mould in the thickness required for the shaped fibrous body.

## Revendications

1. Bloc à un seul cylindre ou à plusieurs cylindres, qui est sans fourrure et coulé dans un moule métallique permanent, qui est en un alliage (1) d'aluminium pour des moteurs à combustion et qui comporte des grains (5) de silicium qui sont incorporés dans la matrice d'aluminium, qui sont répartis dans celle-ci uniformément, qui dépassent de la course (2) de cylindre, de 0,5 à 10 »m, de préférence de 2 à 5 »m, qui sont lissés mécaniquement et qui ont des dimensions de 20 à 80 »m, de préférence de 30 à 60 »m, caractérisé en ce qu'un corps (3) fibreux, qui forme la course (2) de cylindre, qui est pénétré par de l'alliage (1) d'aluminium hypoeutectique, qui a une forme cylindrique creuse et qui est en fibres (4) céramiques ayant des grains (5) de silicium qui y sont insérés, et noyé dans le cylindre.

2. Bloc à un seul cylindre ou à plusieurs cylindres, qui est sans fourrure et coulé dans un moule métallique permanent, qui est en un alliage (1) d'aluminium pour des moteurs à combustion et qui comporte des grains (5) en substance dure qui sont incorporés dans la matrice d'aluminium, qui sont répartis dans celle-ci uniformément, qui dépassent de la course (2) de cylindre, de 0,5 à 10 »m, de préférence de 2 à 5 »m, qui sont lissés mécaniquement et qui ont des dimensions de 20 à 80 »m, de préférence de 30 à 60 »m, caractérisé en ce qu'un corps (3) fibreux, qui forme la course (2) de cylindre, qui est pénétré par de l'alliage d'aluminium (1) hypoeutectique, qui a une forme cylindrique creuse et qui est constitué de fibres céramiques (4) ayant des grains (5) en substance dure qui y sont insérés et qui sont sous la forme de carbure de silicium, de carbures, nitrures ou siliciures, seuls ou à plusieurs, de chrome, de tungstène, de molybdène, de titane, de niobium, de vanadium, est noyé dans le cylindre.

3. Cylindre suivant l'une des revendications 1 ou 2, caractérisé en ce que des grains (5) de silicium et des grains en substance dure sont insérés dans le corps (3) fibreux.

4. Cylindre suivant l'une des revendications 1 à 3, caractérisé en ce que l'épaisseur de paroi du corps (3) fibreux est de 0,5 à 10 mm, de préférence 1,5 à 5 mm.

5. Cylindre suivant l'une des revendications 1 à 4, caractérisé en ce que la proportion de fibres du corps (3) fibreux est de 5 à 30 % en volume et la proportion en grains de silicium et/ou en grains en substance dure est de 30 à 60 % en poids, en rapport avec la proportion de fibres.

6. Cylindre suivant l'une des revendications 1 à 5, caractérisé en ce que le diamètre des fibres (4) est de 2 à 25 »m et le rapport longueur/diamètre est de 5 à 25.

7. Cylindre suivant l'une des revendications 1 à 6, caractérisé en ce que les fibres (4) sont en oxyde d'aluminium ou en silicate d'aluminium.

8. Procédé de fabrication du bloc à un seul cylindre ou à plusieurs cylindres suivant les revendications 1 à 7, dans lequel on met le corps (3) fibreux chauffé sur le fourreau du moule, on remplit le moule de la masse fondue d'alliage d'aluminium à une température de 650 à 800 °C et on solidifie sous pression, caractérisé en ce que l'on chauffe le corps (3) fibreux à une température de 400 à 600°C.

9. Procédé suivant la revendication 8, caractérisé en ce que l'on solidifie la masse fondue d'alliage d'aluminium sous une pression d'au moins 30 bar, de préférence de 200 à 1000 bar.

10. Procédé suivant la revendication 8, caractérisé en ce que l'on solidifie la masse fondue d'alliage d'aluminium sous une pression de 1,2 à 2 bar.

11. Procédé de fabrication du corps (3) fibreux pour l'utilisation suivant la revendication 8, caractérisé en ce que l'on produit le corps (3) fibreux suivant la méthode du moule à aspiration, dans laquelle on trempe un filtre de forme cylindrique creuse et fermé à la base dans une suspension aqueuse alcoolique de fibres, de grains de silicium et/ou de grains en substance dure et de liant organique et/ou inorganique, on moule, par aspiration du liquide provenant de l'intérieur du filtre sur l'enveloppe extérieure du filtre, un voile constitué de fibres et comportant des grains de silicium et/ou des grains en substance dure, qui y sont insérés, on chauffe le voile à des températures de 800 à 1000°C et on l'usine ensuite mécaniquement.

12. Procédé de fabrication du bloc à un seul cylindre ou à plusieurs cylindres suivant les revendications 1 à 7, dans lequel on applique le corps (3) fibreux sur le fourreau du moule, on remplit ensuite le moule de la masse fondue d'alliage d'aluminium à une température de 650 à 800°C et on solidifie sous pression, caractérisé en ce que l'on pulvérise une suspension aqueuse alcoolique de fibres, de grains de silicium et/ou de grains (5) en substance dure et de liant organique et/ou inorganique sur le fourreau du moule dans l'épaisseur du corps fibreux.
